# EUROPEAN PATENT SPECIFICATION

(11) **EP 2 608 450 B1**
(45) Date of publication and mention of the grant of the patent: **30.11.2016**
(21) Application number: 11194437.7
(22) Date of filing: 20.12.2011
(51) Int. Cl.: H04L 12/24, H04L 12/26

(54) **Validation of a communication network of an industrial automation and control system**
Validierung des Kommunikationsnetzwerks eines industrialisierten Automatisierungs- und Steuersystems
Validation d'un réseau de communication d'un système d'automatisation et de contrôle industriel

(43) Date of publication of application: 26.06.2013
(73) Proprietor: ABB Research Ltd., 8050 Zürich (CH)
(72) Inventor: Hadeli, Hadeli, 5400 Baden (CH); Sivanthi, Thanikesavan, 5413 Birmenstorf (CH); Goerlitz, Otmar, 5442 Fislisbach (CH); Wimmer, Wolfgang, 5323 Rietheim (CH)
(74) Representative: ABB Patent Attorneys

(56) References cited:
- WO-A1-02/13009
- Ibm Service Management: "Enhance management for multiprotocol label switching networks with IBM solutions.", , 1 September 2008 (2008-09-01), pages 1-12, XP55029832, Retrieved from the Internet: URL:ftp://ftp.software.ibm.com/common/ssi/ rep_wh/n/GMW14019USEN/GMW14019USEN.PDF [retrieved on 2012-06-13]

## Description

### FIELD OF THE INVENTION

The present invention relates to a unit for validating a communication network of an industrial automation and control system and to a method of validating a communication network of an industrial automation and control system.

### BACKGROUND OF THE INVENTION

Industrial automation and control systems are used to control industrial plants for e.g. manufacturing goods, generating power, processing substances, producing electric power, etc. In the past years, Ethernet has become widely used as a communication technology in industrial automation and control systems. However, the use of Ethernet presents new challenges to commissioning engineers, in particular to make sure that the network is performing as expected. In the past, when only analogue communication technologies were involved, network connections could be easily verified using a multimeter. In present communication technologies, like Ethernet, when nodes or network controls like e.g. network switches are not correctly configured, diagnosing the problem is a difficult, time consuming, and cumbersome problem, as current engineering tools do not provide automatic validation and troubleshooting of Ethernet configurations. Consequently, the commissioning process of such industrial automation and control systems may be time consuming and expensive.

After receipt of the order of a customer, an engineering team for designing industrial automation and control systems may design the requested system and produce, for example, a system description file. In case of electrical substation automation systems, for example, a system description file according to the IEC 61850 standard may be produced, which is the SCD file (SCD: Substation Configuration Description) that contains the information on the entities in the substation automation system as well as on the logical data flow in the substation automation system. In general process automation systems or industrial automation and control systems, the system description file may be the system planner file.

On the basis of the system description file, the commissioning engineers deploy the industrial automation and control system. One particular aspect is to deploy the physical communication network of the industrial automation and control system, which implies, among others, the installation of network cables, network controls, and end nodes in order to form the commissioned network architecture.

EP 1 850 447 A1 discloses a Substation Automation testing tool which combines the information found in a Substation Configuration Language, SCL, file of a substation or Intelligent Electronic Device, IED, with substation relevant data extracted from the Substation Communication network traffic to enable consistency verification of a network configuration. WO 02/13009 A1 discloses the visualisation of network system performance using predicted or measured performance for wireless networks to be deployed.

White paper "Enhance management for multiprotocol label switching networks with IBM solutions", September 2008, discloses management solutions including the visualisation of the configuration of an MPLS network.

In current practice, no validation process whatsoever is made to automatically validate the commissioned network architecture. No state-of-the art solution exists in the realm of industrial automation and control systems which automatically validates the commissioned network. Hence, there is currently no automated solution to test whether the commissioned network is correctly deployed or whether the network contains errors, and as a consequence, in case of a wrongly deployed network, errors may be noticed only during testing or operation of the industrial automation and control system, which may give rise to significant production delays, downtimes or even security risks.

### DESCRIPTION OF THE INVENTION

It is an object of this invention to provide a unit for validating a communication network of an industrial automation and control system and to provide a method of validating a communication network of an industrial automation and control system, which validation unit and validation method do not have at least some of the disadvantages of the prior art. In particular, it is an object of the present invention to provide a unit for validating a communication network of an industrial automation and control system and to provide a method of validating a communication network of an industrial automation and control system, wherein it can be effectively validated that the communication network of the industrial automation and control system has been deployed to a high degree of correctness.

According to the present invention, these objects are achieved through the features of the independent claims. In addition, further advantageous embodiments follow from the dependent claims and the description.

According to the present invention, the above-mentioned objects are particularly achieved by a validation unit according to claim 1.

The validation unit may be included into existing commissioning tools for commissioning industrial automation and controls systems, for example into an testing tool used for engineering and commissioning of substation automation systems. For example, the validation unit may include programmed software modules comprising computer code for directing a processor of a computer to perform the required functions. Accordingly, a notebook or laptop computer comprising the validation unit may be plugged to one of the devices or components of the deployed communication network, for example to a switch, of the industrial automation and control system and validation of the deployed communication network may be performed by collecting effective data of the deployed communication network and comparing the effective data with plan data. Hence, the validation unit according to the invention provides for automatic, reliable and fast validation of a deployed communication network, such that production delay, downtimes and security risks are minimized.

The collector module is configured to collect the effective data by sending request messages to one or more network devices or network components of the deployed communication network of the industrial automation and control system. The request messages may be sent according to the plan data, which may include, for example, all network addresses of network components of the designed communication network. Hence, the collector module may, for example, send request messages to each of the network components. The network components are configured to send configuration messages in response to such request messages to the validation unit, wherein the configuration messages include installed network connectivity indicative of physical and/or logical connections of the network components. Hence, the collector module may receive the configuration of network components of the deployed communication network and may generate effective data of the deployed communication network of the industrial automation and control system. In other words, a model may be built by communicating with all network components of the communication network using for example a standardized protocol, e.g. SNMP or IEC 61850 communication, which is supported by all network components and with which the network related information can be accessed. The network communication model may be stored in a machine readable format as effective data, wherein all the physical connectivity, as well logical connectivity and all relevant network related configuration information are included. The logical connectivity may include VLAN (virtual local area network) filters, multicasting filters, etc. To obtain VLAN settings and multicast filters, each network component, for example each network switch or control, may be contacted to obtain the VLAN configuration settings of every port of the network component, for example from a Q-BRIDGE-MIB. MIBs (Management Information Base) are databases which include stored management information of managed devices. The database may have a tree-like structure, wherein each leaf is identified by a unique OID (Object Identifier). For instance, to get the VLAN identifier, by use of the SNMP protocol, the switch may be contacted to receive the value of the MIB object dot1qV41anIndex, which MIB object has the identifier 1.3.6.1.2.1.17.7.1.4.2.1.2.

In another embodiment, the collector module is configured to detect and/or identify network devices, by broadcasting ping-type messages and evaluating the responses. To this purpose, the collector module may automatically choose and configure a network address which is not in use in the network by listening to LLDP packet from the switch to which it is connected to, by using the management address in the LLDP packet together with a known subnet mask of the network and by using ARP request to verify whether the chosen network address is not in use in the network. Such detection mechanism is particularly helpful in case the deployed network components deviate in number and identification from those according to plan data. Switches and controls of the deployed communication network of the industrial automation and control system may be configured to respond to the sender of a broadcast message with their network identity information, for instance their network address. Hence, the collector module may use the network identity information from the responses to the broadcast message for obtaining the configuration and for generating effective data of all components of the deployed communication network of the industrial automation and control system, by sending request messages as above. Furthermore the detection mechanism may be extended to sub networks of the network which are generally not reached by the broadcast detection messages mentioned. To this purpose, sub networks are identified from the management address entries in LLDP MIB of the border network devices.

In a further embodiment, the collector module is configured to collect the effective data using at least one of: Link Layer Discovery Protocol (LLDP), Simple Network Management Protocol (SNMP), an IEC 61850 data object, and an address forwarding table (AFT). These protocols and standards are widely available in state-of-the-art network components. LLDP is a vendor neutral protocol for advertising device identity and capabilities of network devices and facilitates the process of obtaining information about neighbouring devices. SNMP is a protocol to query configuration data of network components. End nodes, for example intelligent electronic devices (IED), laptops, printers, etc. often do not have LLDP enabled. Thus, in order to map out the topology until the end nodes, address forwarding tables AFT may be inferred. For example, the AFT of a switch may include MAC addresses (MAC: Medium Access Control) along with port numbers through which packets destined for that address have to be forwarded.

In an embodiment, the difference detector is configured to build a comprehensive, or enhanced, network communication model of the designed communication network and a comprehensive network communication model of the effective communication network, wherein differences between the designed communication network and the deployed communication network are detected using the comprehensive network communication models. For example, the engineered respectively the designed communication network of an industrial automation and control system may be represented in the form of a machine readable system configuration. However, other expert/implicit information concerning the communication network may exist, which is not explicitly written in the configuration file, but which is applied when commissioning or deploying the communication network. Such expert/implicit information may indicate, for example, that ingress filters are turned off by default in all switches, that all switch ports not connected to end nodes are disabled, that a community string (a kind of pre-defined passphrase) is used to interrogate the switch using SNMPv2, or that the station computer can access all intelligent electronic devices (IED) of the communication network. From such expert/implicit knowledge, a comprehensive communication model [C'] of the engineered/designed communication network is built and stored in a machine readable format that includes all physical connectivity, logical connectivity (logical flow) and all relevant network related configuration information. Accordingly, a comprehensive network communication model [C] is determined from the deployed communication network. The deployed network is only correct in case [C]==[C'].

In a further embodiment, the difference detector is configured to build a comprehensive network communication model of the deployed communication network and to transform the model into a system description file, wherein differences between the designed communication network and the deployed communication network are detected using this system description file. The comprehensive network communication model [C] of the deployed communication network may be built, as described earlier, by collecting effective data of the deployed communication network. Thereafter, the model may be transformed to the system description file [S], which may be compared to the system description file [S'] of the engineered/designed communication network. The transformation may include a pattern matching, which can be seen as an expert knowledge corresponding to the expert knowledge described earlier. The deployed network is only correct in case [S]==[S']. In particular, the comparison of information as described above may include content comparison, string comparison, etc.

In another embodiment, the validation unit further comprises a notification module configured to generate one or more notification messages in case the difference detector detects one or more differences between the designed communication network and the deployed communication network. For example, the notification module may be configured to display differences between the designed communication network and the deployed communication network on a screen of a laptop computer. Alternatively, the notification module may be configured to transmit differences between the designed communication network and the deployed communication network to remote systems.

In addition to the unit for validating a communication network of an industrial automation and control system, the invention further relates to a method of validating a communication network of an industrial automation and control system according to claim 9 and to a computer program product comprising a computer-readable medium according to claim 13.

The method of validating a communication network of an industrial automation and control system, comprises: storing plan data defining a designed communication network of an industrial automation and control system, collecting effective data defining a deployed communication network of the industrial automation and control system, and detecting differences between the designed communication network and the deployed communication network using the plan data and the effective data. Effective data is collected by sending request messages to one or more network devices of the deployed communication network of the industrial automation and control system and receiving one or more response messages generated in response to one or more broadcast messages sent to the deployed communication network of the industrial automation and control system. In a variant, effective data is collected using at least one of: Link Layer Discovery Protocol (LLDP), Simple Network Management Protocol (SNMP), an IEC 61850 data object, and an address forwarding table (AFT). In a further variant, a comprehensive network communication model of the designed communication network and a comprehensive network communication model of the effective communication network are built, wherein differences between the designed communication network and the deployed communication network are detected using the comprehensive network communication models. In a variant, a comprehensive network communication model of the deployed communication network is built and transformed into a system description file, wherein differences between the designed communication network and the deployed communication network are detected using the system description file. In a further variant, one or more notification messages are generated in case the difference detector detects one or more differences between the designed communication network and the deployed communication network.

### BRIEF DESCRIPTION OF THE DRAWINGS

The present invention will be explained in more detail, by way of example, with reference to the drawings in which:
Fig. 1 shows a validation unit according to the invention;
Fig. 2 shows an exemplary substation automation system requested by a customer;
Fig. 3 shows schematically a substation automation system which has been designed by an engineering team for designing industrial automation and controls systems;
Fig. 4 shows schematically the physical view of a network for a substation automation system which has been deployed by commissioning engineers;
Fig. 5 shows schematically the logical view of the network according to Fig. 4; and
Fig. 6 shows schematically exemplary steps for validating a communication network according to the invention.

### DETAILED DESCRIPTION OF PREFERRED EMBODIMENTS

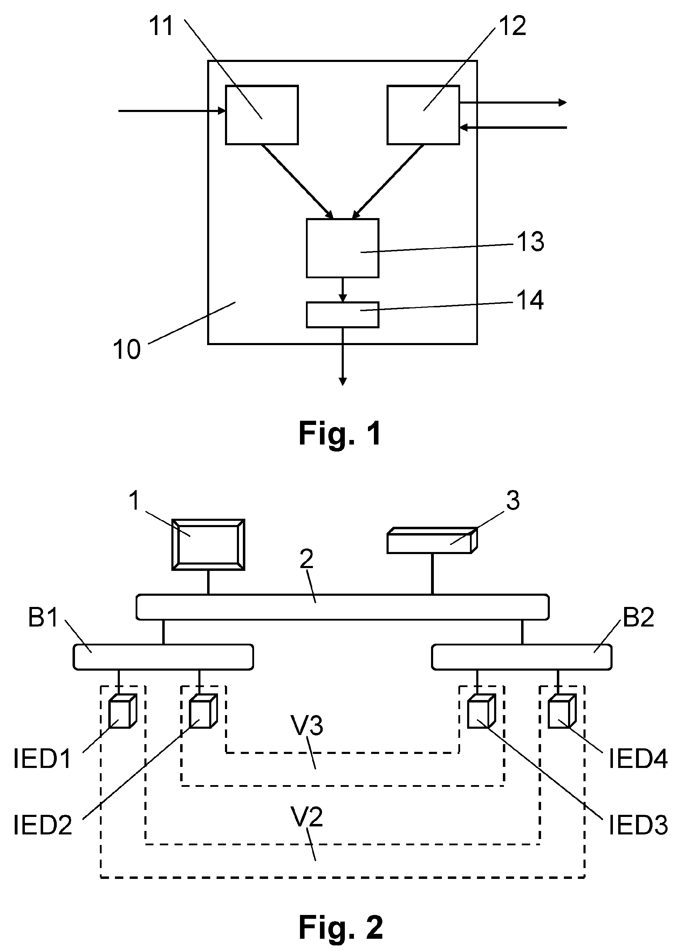

Fig. 1 shows a validation unit 10 according to the invention. The validation unit 10 includes a planner module 11, a collector module 12, and a difference detector 13, and a notification module 14. Preferably, the validation unit 10 and/or the functional modules included in the validation unit 10 are implemented as programmed software modules comprising computer program code for directing a processor of a computer to perform functions as described in the following. The computer program code is stored on a tangible computer-readable medium which is connected fixed or removable in the respective computer. One skilled in the art will understand, however, that in alternative embodiments the functional modules may be implemented fully or at least partly by way of hardware components. The computer may include one or more network interfaces, for example in order to receive plan data of a designed communication network of an industrial automation and control system and for example to collect effective data of a deployed communication network of the industrial automation and control system. The computer may include a display which may be configured to display differences detected by the difference detector 13. Alternatively, a network interface of the computer may be configured to transmit differences detected by the difference detector 13 to one or more remote systems.

The planner module 11 is configured to store plan data of a designed communication network of an industrial automation and control system, which may include, for example, a planner file or a table according to Table 1 below.

The collector module 12 is configured to collect effective data of a deployed communication network of the industrial automation and control system, wherein, for example, the collected effective data may be arranged according to Table 2 below.

The difference detector 13 is configured to detect differences between the designed communication network and the deployed communication network using plan data and the deployed network configuration data, wherein, for example, the differences are marked with underline or strike-through attributes according to Table 2 below.

Fig. 2 shows schematically an exemplary designed communication network of a substation automation system requested by a customer. A station computer 1 is connected to a station bus 2. A gateway 3 is connected to the station bus 2 as well. Moreover, a first bay B1 and a second bay B2 are connected to the station bus 2. The first bay B1 serves for connecting a first intelligent electronic device IED1 and a second intelligent electronic device IED2. The second bay B2 serves for connecting a third intelligent electronic device IED3 and a fourth intelligent electronic device IED4.

Fig. 2 may relate, for example, to a communication network of a substation of an electric power system, e.g. in high and medium-voltage power networks, wherein the substation includes primary devices such as electrical cables, lines, bus bars, switches, power transformers and instrument transformers, which may be arranged in switch yards and/or bays. These primary devices are operated in an automated way through the communication network by the substation automation system, which may be controlled by the station computer 1, for example. The communication network may include secondary devices of the substation automation system, including intelligent electronic devices IED1, IED2, IED3, IED4, which are responsible for protection, control and monitoring of the primary devices. The communication network my further include a gateway 3 which may provide access, for example, between the substation and/or the substation automation system and remote sites.

As indicated in Fig. 2, the intelligent electronic devices IED1, IED2, IED3, IED4 may be connected through an Ethernet-based communication network, which includes the station bus 2 as well as the bays B1, B2, in order to exchange system-wide information, e.g. according to the IEC 61850 protocol, such as, for example, status updates of switches and breakers, interlocking information, breaker and switch commands, and/or information reports.

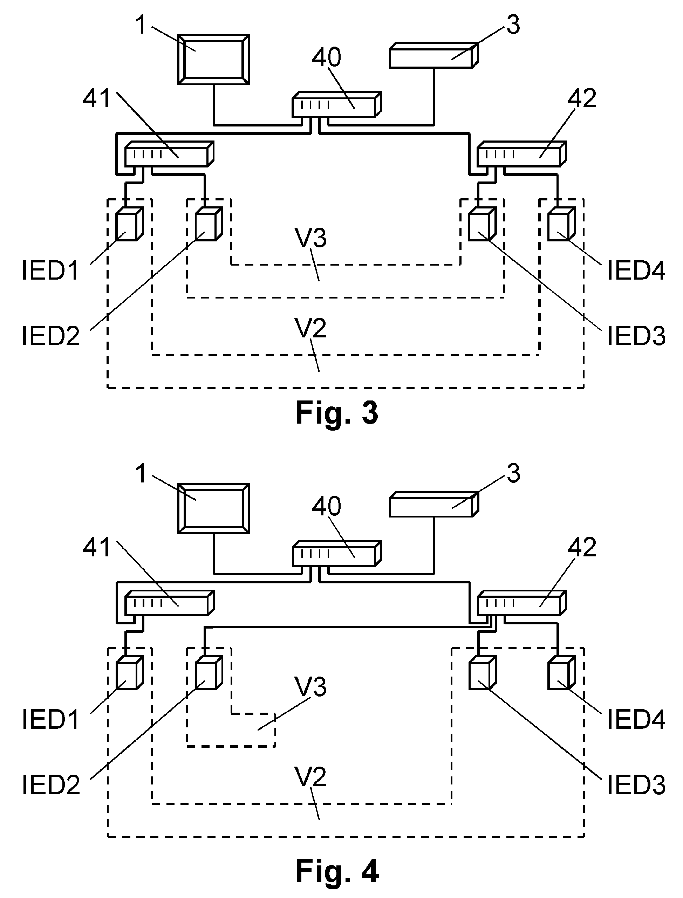

Fig. 3 shows schematically a designed communication network of a substation automation system which has been designed by an engineering team for designing industrial automation and control systems on the basis of the requested substation automation system according to Fig. 2. As shown in Fig. 3, a switch for the station level 40 is provided. Moreover, a switch for the first bay 41 and a switch for the second bay 42 are provided. The station computer 1 is connected through a network cable to the switch for the station level 40, which is further connected through two network cables to the switch for the first bay 41 and to the switch for the second bay 42. The gateway 3 is connected through a network cable to the switch for the station level 40. The first and second intelligent electronic device IED1, IED2 are each connected through a network cable to the switch for the first bay 41. Analogously, the third and fourth intelligent electronic device IED3, IED4 are each connected through a network cable to the switch for the second bay 42.

As indicated in Fig. 2, the first intelligent electronic device IED1 and the fourth intelligent electronic device IED4 are required to be arranged in a second VLAN (virtual local area network) V2. Similarly, the second intelligent electronic device IED2 and the third intelligent electronic device IED3 are required to be arranged in a third VLAN V3. Further VLANs such as V4 and a management VLAN V1 may be required or appropriate, but are not shown in Fig. 2 for sake of clearness. Accordingly, for example the first intelligent electronic device IED1 and the fourth intelligent electronic device IED4, which are both arranged within the second VLAN V2, form a group of hosts which may communicate as if they were attached to the same broadcast domain.

In Fig. 3, the intelligent electronic devices IED1, IED2, IED3, IED4 are arranged in a second VLAN V2 and in a third VLAN V3 as required, which is achieved, in particular, through appropriate configuration of the switch for the first bay 41 and the switch for the second bay 42.

In Table 1, the data of the designed communication network is shown, which may be equal to or form the basis of the plan data.

**Table 1**

| No. | Device name | IP address | VLAN | Communicate with | Physically connected to |
|---|---|---|---|---|---|
| 1 | station computer 1 | 192.168.10.10 | V4, V1 | gateway 3, all switches, IED1, IED2, IED3, IED4 | switch for station level 40 |
| 2 | gateway 3 | 192.168.10.11 | V4, V1 | station computer 1 | switch for station level 40 |
| 3 | switch for station level 40 | 192.168.10.12 | | Transports data only | station computer 1, gateway 3, switch for first bay 41, switch for second bay 42 |
| 4 | switch for first bay 41 | 192.168.10.13 | | Transports data only | switch for station level 40, IED1 and IED2 |
| 5 | switch for second bay 42 | 192.168.10.14 | | Transports data only | switch for station level 40, IED3 and IED4 |
| 6 | IED1 | 192.168.10.15 | V2, V1 | IED4, station computer 1 (via V1) | switch for first bay 41 |
| 7 | IED2 | 192.168.10.16 | V3, V1 | IED3, station computer 1 (via V13) | switch for first bay 41 |
| 8 | IED3 | 192.168.10.17 | V3, V1 | IED2, station computer 1 (via V1) | switch for second bay 42 |
| 9 | IED4 | 192.168.10.18 | V2, V1 | IED1, station computer 1 (via V1) | switch for second bay 42 |

Based on to the information provided in Table 1, for example on the basis of corresponding plan data, commissioning engineers may deploy a network for a substation automation system.

Fig. 4 shows schematically the physical view of a deployed communication network for a substation automation system, which has been deployed by commissioning engineers according to the requirements specified in Table 1 above. However, by mistake during commissioning the deployed communication network, the second intelligent electronic device IED2 is wrongly connected to the switch for the second bay 42. Moreover, the third VLAN V3 comprises only the second intelligent electronic device IED2. The second VLAN V2 wrongly comprises also the third intelligent electronic device IED3.

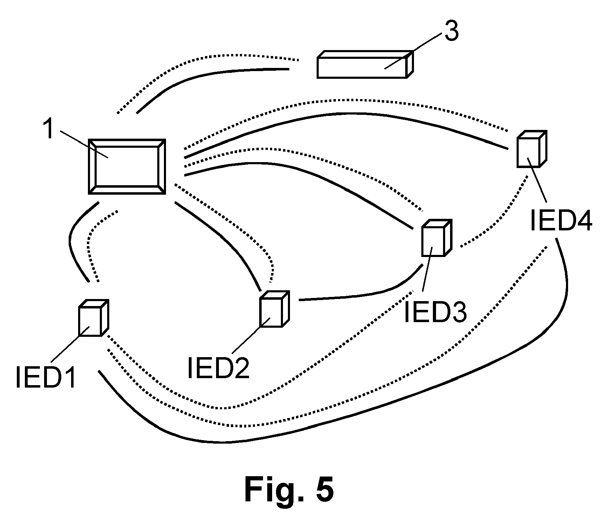

Fig. 5 shows schematically the logical view of the network according to Fig. 4, wherein the designed (required) communication network is shown in solid lines and the designed (deployed) communication network is shown in dotted lines.

According to the invention, a collector module is configured to collect the effective data of the deployed communication network of the substation automation system. The collector module retrieves all the network related information (physical, logical, settings, etc.) from the deployed network. Upon receipt of this information, the network related information may be structured in a well-defined model, which is then compared to the designed model according to the designed communication network. For example, a method for validation or verification may include the step of whether every physical and logical network communication and whether every network control settings are similar or equal to what has been designed by the design engineers.

For example, the commissioned/deployed communication network may be modelled according to a tabulated model shown in Table 2:

**Table 2**

| No. | Device name | IP address | VLAN | Communicate with or connect to | Physically connected to |
|---|---|---|---|---|---|
| 1 | station computer 1 | 192.168.10.10 | V4, V1 | gateway 3, all switches, IED1, IED2, IED3, IED4 | switch for station level 40 |
| 2 | gateway 3 | 192.168.10.11 | V4, V1 | station computer 1 | switch for station level 40 |
| 3 | switch for station level 40 | 192.168.10.12 | | Transport s data only | station computer 1, gateway 3, switch for first bay 41, switch for second bay 42 |
| 4 | switch for first bay 41 | 192.168.10.13 | | Transport s data only | switch for station level 40, IED1 |
| 5 | switch for second bay 42 | 192.168.10.14 | | Transport s data only | switch for station level 40, IED2, IED3 and IED4 |
| 6 | IED1 | 192.168.10.15 | V2, V1 | IED3, IED4, station computer 1 (via V1) | switch for first bay 41 |
| 7 | IED2 | 192.168.10.16 | V3, V1 | station computer 1 (via V1) | switch for second bay 42 |
| 8 | IED3 | 192.168.10.17 | V2, V1 | IED1, IED4, station computer 1 (via V1) | switch for second bay 42 |
| 9 | IED4 | 192.168.10.18 | V2, V1 | IED1, IED3, station computer 1 (via V1) | switch for second bay 42 |

Accordingly a difference detector may be configured to detect differences between the data of Table 1, which corresponds to the designed network, and the data of Table 2, which corresponds to the deployed network. In Table 2 above, the errors which occurred during commissioning of the deployed communication network are marked by underlines, where additional communication network features were added, and by strike-through line, where required communication network features are missing.

The validation unit 10 according to the invention helps the commissioning engineers in validating their deployed work against the engineered/designed network. When the deployed communication network is correctly validated, then confidence on the performance of the deployed communication network is increased. The validation helps the commissioning engineers in pinpointing the discrepancy between the deployed communication network and the designed communication network quickly. The ability to pinpoint the discrepancy may further be helpful in case of problems with a substation automation system, such that one can identify if the problem occurs due to a mistake in commissioning the communication network or due to another error source. In case of changes in the communication network or replacement of communication network components (cables, switches, etc.), the validation unit 10 provides for fast and thorough testing.

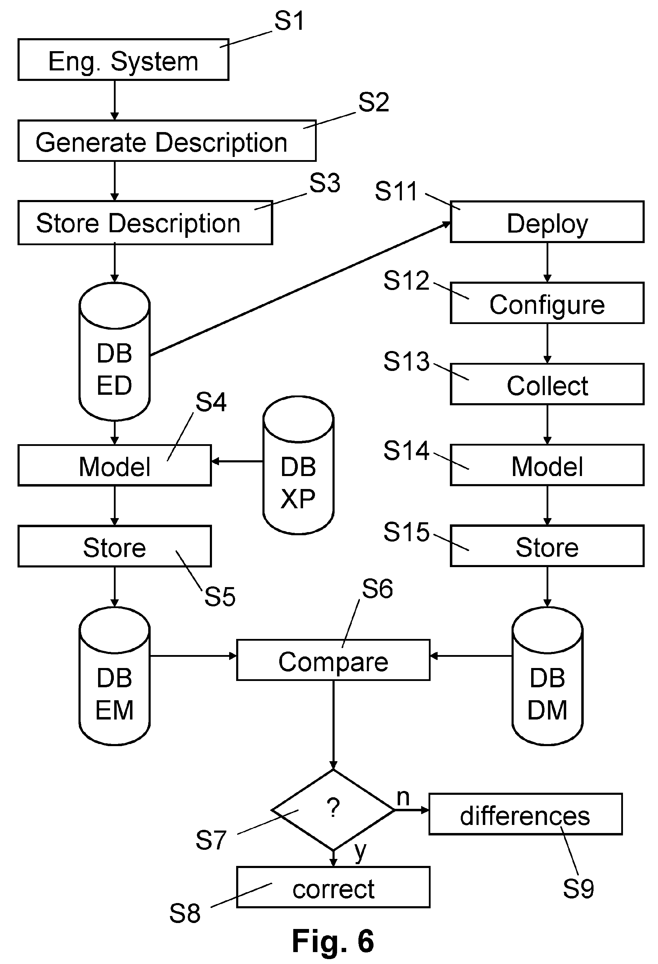

Fig. 6 shows schematically exemplary steps for validating a deployed communication network of the industrial automation and control system. In step S1, the design engineers design/engineer the required industrial automation and control system according to a customer's specification. In step S2 a system description file is generated. In step S3, the system description file is stored in a database DBED. In step S4 a comprehensive network model of the designed/engineered communication network is built on the basis of the database DBED and a further database DBXP, which stores expert information. In step S5, the model of the designed/engineered communication network is stored in database DBEM. In step S11, commissioning engineers deploy a communication network of an industrial automation and control system. In step S12, the deployed communication network is configured. In step S 13, network related information is collected from the deployed communication network. In step S14, a comprehensive network model of the deployed communication network is built. In step S15, the comprehensive network model of the deployed communication network is stored in database DBDM. In step S6, the comprehensive network model of the designed/engineered communication network from database DBED is compared to the comprehensive network model of the deployed communication network from database DBDM. In step S7, it is decided if a difference between the models can be detected. In step S8, when no difference between the models can be detected, for example a commissioning engineer is informed accordingly, for example by displaying a corresponding message on a screen of a computer that the deployed communication network does not have any errors. In step S9, when a difference between the models can be detected, the commissioning engineer may be informed about this fact by displaying a list with discrepancies between the designed communication network and the deployed communication network which are for example highlighted in order to maximize visibility of the faults in the deployed communication network.

## Claims

1. A unit (10) for validating a communication network of an industrial automation and control system, comprising:
a planner module (11) configured to store plan data defining a designed communication network of an industrial automation and control system,
a collector module (12) configured to collect effective data defining a deployed communication network of the industrial automation and control system, and
a difference detector (13) configured to detect differences between the designed communication network and the deployed communication network using the plan data and the effective data,
wherein the plan data and the effective data are system description files with substation configuration descriptions according to IEC 61850, and
wherein the collector module (12) is configured to collect the effective data by sending request messages to one or more network devices of the communication network of the industrial automation and control system, and by receiving, in response, configuration messages including physical and/or logical connections of the network devices.

2. The unit (10) according to claim 1, wherein the collector module (12) is configured to collect the effective data using one or more response messages comprising network identity information of a responding network device and generated in response to one or more broadcast messages sent to the deployed communication network of the industrial automation and control system.

3. The unit (10) according to claim 2, wherein the collector module (12) is configured to collect the effective data using response messages comprising network identity information of responding network devices of identified sub-networks.

4. The unit according to one of claims 1 to 3, wherein the difference detector (13) is configured to build, based on implicit or expert information, a comprehensive network communication model of the designed communication network, wherein differences between the designed communication network and the deployed communication network are detected using the comprehensive network communication model.

5. The unit according to claim 4, wherein the implicit or expert information includes at least one of i) ingress filters are turned off by default in all switches, ii) all switch ports not connected to end nodes are disabled, iii) a station computer can access all intelligent electronic devices, IED, of the communication network.

6. The unit according to one of claims 1 to 4, wherein the difference detector (13) is configured to transform, based on implicit or expert information, the effective data into the system description file of the deployed communication network, wherein differences between the designed communication network and the deployed communication network are detected using the system description file of the deployed communication network and the system description file of the designed communication network.

7. The unit according to claim 6, wherein the industrial automation and control system is a substation automation system of a substation in a power transmission or distribution network.

8. The unit according to one of claims 1 to 7, further comprising a notification module (14) configured to generate one or more notification messages in case the difference detector detects one or more differences between the designed communication network and the deployed communication network.

9. A method of validating a communication network of an industrial automation and control system, comprising:
storing (S3) plan data defining a designed communication network of an industrial automation and control system,
collecting (S13) effective data defining a deployed communication network of the industrial automation and control system, and
detecting (S6) differences between the designed communication network and the deployed communication network using the plan data and the effective data, wherein the plan data and the effective data are system description files with substation configuration descriptions according to IEC 61850, and
wherein effective data is collected by sending request messages to one or more network devices of the deployed communication network of the industrial automation and control system, and by receiving, in response, configuration messages including physical and/or logical connections of the network devices.

10. The method according to claim 9, wherein effective data is collected using one or more response messages comprising network identity information of a responding network device and generated in response to one or more broadcast messages sent to the deployed communication network of the industrial automation and control system.

11. The method according to one of claims 9 to 10, wherein a comprehensive network communication model of the designed communication network is built based on implicit or expert information, wherein differences between the designed communication network and the deployed communication network are detected using the comprehensive network communication models.

12. The method according to one of claims 9 to 11, wherein a comprehensive network communication model of the deployed communication network is built and transformed into the system description file, wherein differences between the designed communication network and the deployed communication network are detected using the system description file.

13. A computer program product comprising a computer-readable medium having stored thereon computer program code which directs a processor of a computer to:
store plan data of a designed communication network of an industrial automation and control system,
collect effective data of a deployed communication network of the industrial automation and control system, and
detect differences between the designed communication network and the deployed communication network using the plan data and the effective data,
wherein the plan data and the effective data are system description files with substation configuration descriptions according to IEC 61850, and
wherein effective data is collected by sending request messages to one or more network devices of the deployed communication network of the industrial automation and control system, and by receiving, in response, configuration messages including physical and/or logical connections of the network devices.

## Patentansprüche

1. Einheit (10) zum Validieren eines Kommunikationsnetzwerks eines industriellen Automatisierungs- und Steuersystems, umfassend:
ein Planungsmodul (11), konfiguriert zum Speichern von Plandaten, die ein entworfenes Kommunikationsnetzwerk eines industriellen Automatisierungs- und Steuersystems definieren,
ein Erfassungsmodul (12), konfiguriert zum Erfassen von Nutzdaten, die ein eingesetztes Kommunikationsnetzwerk des industriellen Automatisierungs- und Steuersystems definieren, und
einen Differenzdetektor (13), konfiguriert zum Detektieren von Differenzen zwischen dem entworfenen Kommunikationsnetzwerk und dem eingesetzten Kommunikationsnetzwerk unter Verwendung der Plandaten und der Nutzdaten,
wobei die Plandaten und die Nutzdaten Systembeschreibungsdateien mit Unterstation-Konfigurationsbeschreibungen gemäß IEC 61850 sind, und
wobei das Erfassungsmodul (12) konfiguriert ist, die Nutzdaten durch Senden von Anforderungsnachrichten an eine oder mehrere Netzwerkvorrichtungen des Kommunikationsnetzwerks des industriellen Automatisierungs- und Steuersystems und durch Empfangen, als Antwort, von Konfigurationsnachrichten, die physikalische und/oder logische Verbindungen der Netzwerkvorrichtungen enthalten, zu erfassen.

2. Einheit (10) nach Anspruch 1, wobei das Erfassungsmodul (12) konfiguriert ist, die Nutzdaten unter Verwendung einer oder mehrerer Antwortnachrichten zu erfassen, die Netzwerkidentitätsinformationen einer antwortenden Netzwerkvorrichtung umfassen und als Antwort auf eine oder mehrere Rundsendenachrichten, die an das eingesetzte Kommunikationsnetzwerk des industriellen Automatisierungs- und Steuersystems gesandt wurden, erzeugt werden.

3. Einheit (10) nach Anspruch 2, wobei das Erfassungsmodul (12) konfiguriert ist, die Nutzdaten unter Verwendung von Antwortnachrichten, die die Netzwerkidentitätsinformationen von antwortenden Netzwerkvorrichtungen identifizierter Unternetzwerke umfassen, zu erfassen.

4. Einheit nach einem der Ansprüche 1 bis 3, wobei der Differenzdetektor (13) konfiguriert ist, basierend auf impliziten oder Experten-Informationen ein umfassendes Netzwerkkommunikationsmodell des entworfenen Kommunikationsnetzwerks aufzubauen, wobei Differenzen zwischen dem entworfenen Kommunikationsnetzwerk und dem eingesetzten Kommunikationsnetzwerk unter Verwendung des umfassenden Netzwerkkommunikationsmodells detektiert werden.

5. Einheit nach Anspruch 4, wobei die impliziten oder Experten-Informationen mindestens eines von Folgendem enthalten: i) Zugangsfilter sind standardmäßig in allen Schaltern ausgeschaltet, ii) alle Schalteranschlüsse, die nicht mit Endknoten verbunden sind, sind deaktiviert, iii) ein Stationscomputer kann auf alle intelligenten elektronischen Vorrichtungen, IED, des Kommunikationsnetzwerks zugreifen.

6. Einheit nach einem der Ansprüche 1 bis 4, wobei der Differenzdetektor (13) konfiguriert ist, die Nutzdaten basierend auf impliziten oder Experten-Informationen in die Systembeschreibungsdatei des eingesetzten Kommunikationsnetzwerks umzuwandeln, wobei Differenzen zwischen dem entworfenen Kommunikationsnetzwerk und dem eingesetzten Kommunikationsnetzwerk unter Verwendung der Systembeschreibungsdatei des eingesetzten Kommunikationsnetzwerks und der Systembeschreibungsdatei des entworfenen Kommunikationsnetzwerks detektiert werden.

7. Einheit nach Anspruch 6, wobei das industrielle Automatisierungs- und Steuersystem ein Unterstation-Automatisierungssystem einer Unterstation in einem Leistungsübertragungs- oder -verteilungsnetzwerk ist.

8. Einheit nach einem der Ansprüche 1 bis 7, ferner umfassend ein Benachrichtigungsmodul (14), konfiguriert zum Erzeugen einer oder mehrerer Benachrichtigungsnachrichten, wenn der Differenzdetektor eine oder mehrere Differenzen zwischen dem entworfenen Kommunikationsnetzwerk und dem eingesetzten Kommunikationsnetzwerk detektiert.

9. Verfahren zum Validieren eines Kommunikationsnetzwerks eines industriellen Automatisierungs- und Steuersystems, umfassend:
Speichern (S3) von Plandaten, die ein entworfenes Kommunikationsnetzwerk eines industriellen Automatisierungs- und Steuersystems definieren,
Erfassen (S13) von Nutzdaten, die ein eingesetztes Kommunikationsnetzwerk des industriellen Automatisierungs- und Steuersystems definieren, und
Detektieren (S6) von Differenzen zwischen dem entworfenen Kommunikationsnetzwerk und dem eingesetzten Kommunikationsnetzwerk unter Verwendung der Plandaten und der Nutzdaten,
wobei die Plandaten und die Nutzdaten Systembeschreibungsdateien mit Unterstation-Konfigurationsbeschreibungen gemäß IEC 61850 sind, und
wobei Nutzdaten durch Senden von Anforderungsnachrichten an eine oder mehrere Netzwerkvorrichtungen des eingesetzten Kommunikationsnetzwerks des industriellen Automatisierungs- und Steuersystems und durch Empfangen, als Antwort, von Konfigurationsnachrichten, die physikalische und/oder logische Verbindungen der Netzwerkvorrichtungen enthalten, erfasst werden.

10. Verfahren nach Anspruch 9, wobei Nutzdaten unter Verwendung einer oder mehrerer Antwortnachrichten erfasst werden, die Netzwerkidentitätsinformationen einer antwortenden Netzwerkvorrichtung umfassen und als Antwort auf eine oder mehrere Rundsendenachrichten, die an das eingesetzte Kommunikationsnetzwerk des industriellen Automatisierungs- und Steuersystems gesandt wurden, erzeugt werden.

11. Verfahren nach einem der Ansprüche 9 bis 10, wobei ein umfassendes Netzwerkkommunikationsmodell des entworfenen Kommunikationsnetzwerks basierend auf impliziten oder Experten-Informationen aufgebaut wird, wobei Differenzen zwischen dem entworfenen Kommunikationsnetzwerk und dem eingesetzten Kommunikationsnetzwerk unter Verwendung des umfassenden Netzwerkkommunikationsmodells detektiert werden.

12. Verfahren nach einem der Ansprüche 9 bis 11, wobei ein umfassendes Netzwerkkommunikationsmodell des eingesetzten Kommunikationsnetzwerks aufgebaut und in die Systembeschreibungsdatei umgewandelt wird, wobei Differenzen zwischen dem entworfenen Kommunikationsnetzwerk und dem eingesetzten Kommunikationsnetzwerk unter Verwendung der Systembeschreibungsdatei detektiert werden.

13. Computerprogrammprodukt, umfassend ein computerlesbares Medium, auf dem Computerprogrammcode gespeichert ist, der einen Prozessor eines Computers anweist zum:
Speichern von Plandaten eines entworfenen Kommunikationsnetzwerks eines industriellen Automatisierungs- und Steuersystems,
Erfassen von Nutzdaten eines eingesetzten Kommunikationsnetzwerks des industriellen Automatisierungs- und Steuersystems, und
Detektieren von Differenzen zwischen dem entworfenen Kommunikationsnetzwerk und dem eingesetzten Kommunikationsnetzwerk unter Verwendung der Plandaten und der Nutzdaten,
wobei die Plandaten und die Nutzdaten Systembeschreibungsdateien mit Unterstation-Konfigurationsbeschreibungen gemäß IEC 61850 sind, und
wobei Nutzdaten durch Senden von Anforderungsnachrichten an eine oder mehrere Netzwerkvorrichtungen des eingesetzten Kommunikationsnetzwerks des industriellen Automatisierungs- und Steuersystems und durch Empfangen, als Antwort, von Konfigurationsnachrichten, die physikalische und/oder logische Verbindungen der Netzwerkvorrichtungen enthalten, erfasst werden.

## Revendications

1. Unité (10) de validation d'un réseau de communication d'un système d'automatisation et de commande industrielles, comprenant :
un module planificateur (11) configuré pour enregistrer des données de plan définissant un réseau de communication désigné d'un système d'automatisation et de commande industrielles,
un module collecteur (12) configuré pour collecter des données effectives définissant un réseau de communication déployé du système d'automatisation et de commande industrielles, et
un détecteur de différences (13) configuré pour détecter des différences entre le réseau de communication désigné et le réseau de communication déployé au moyen des données de plan et des données effectives,
dans laquelle les données de plan et les données effectives sont des fichiers de description de système comportant des descriptions de configuration de poste en conformité avec IEC 61850, et
dans laquelle le module collecteur (12) est configuré pour collecter les données effectives en envoyant des messages de demande à un ou plusieurs dispositifs de réseau du réseau de communication du système d'automatisation et de commande industrielles, et en recevant, en réponse, des messages de configuration contenant des connections physiques et/ou logiques des dispositifs de réseau.

2. Unité (10) selon la revendication 1, dans laquelle le module collecteur (12) est configuré pour collecter les données effectives au moyen d'un ou de plusieurs messages de réponse comprenant des informations d'identité de réseau relatives à un dispositif de réseau répondeur et générés en réponse à un ou plusieurs messages à diffusion générale envoyés au réseau de communication déployé du système d'automatisation et de commande industrielles.

3. Unité (10) selon la revendication 2, dans laquelle le module collecteur (12) est configuré pour collecter les données effectives au moyen de messages de réponse comprenant des informations d'identité de réseau relatives à des dispositifs de réseau répondeurs de sous-réseaux identifiés.

4. Unité selon l'une des revendications 1 à 3, dans laquelle le détecteur de différences (13) est configuré pour élaborer, sur la base d'informations implicites ou spécialisées, un modèle de communication de réseau global du réseau de communication désigné, dans laquelle des différences entre le réseau de communication désigné et le réseau de communication déployé sont détectées au moyen du modèle de communication de réseau global.

5. Unité selon la revendication 4, dans laquelle les informations implicites ou spécialisées comprennent au moins une des indications suivantes : i) les filtres d'entrée sont bloqués par défaut dans tous les commutateurs, ii) tous les ports de commutateurs qui ne sont pas connectés à des noeuds d'extrémité sont désactivés, iii) un ordinateur de poste peut accéder à tous les dispositifs électroniques intelligents, dits IED, du réseau de communication.

6. Unité selon l'une des revendications 1 à 4, dans laquelle le détecteur de différences (13) est configuré pour transformer, sur la base d'informations implicites ou spécialisées, les données effectives en le fichier de description de système du réseau de communication déployé, dans laquelle des différences entre le réseau de communication désigné et le réseau de communication déployé sont détectées au moyen du fichier de description de système du réseau de communication déployé et du fichier de description de système du réseau de communication désigné.

7. Unité selon la revendication 6, dans laquelle le système d'automatisation et de commande industrielles est un système d'automatisation de poste d'un poste dans un réseau de transport ou de distribution d'énergie.

8. Unité selon l'une des revendications 1 à 7, comprenant en outre un module de notification (14) configuré pour générer un ou plusieurs messages de notification au cas où le détecteur de différences détecte une ou plusieurs différences entre le réseau de communication désigné et le réseau de communication déployé.

9. Procédé de validation d'un réseau de communication d'un système d'automatisation et de commande industrielles, comprenant les étapes consistant à :
enregistrer (S3) des données de plan définissant un réseau de communication désigné d'un système d'automatisation et de commande industrielles,
collecter (S13) des données effectives définissant un réseau de communication déployé du système d'automatisation et de commande industrielles, et
détecter (S6) des différences entre le réseau de communication désigné et le réseau de communication déployé au moyen des données de plan et des données effectives,
dans lequel les données de plan et les données effectives sont des fichiers de description de système comportant des descriptions de configuration de poste en conformité avec IEC 61850, et
dans lequel les données effectives sont collectées en envoyant des messages de demande à un ou plusieurs dispositifs de réseau du réseau de communication déployé du système d'automatisation et de commande industrielles, et en recevant, en réponse, des messages de configuration contenant des connections physiques et/ou logiques des dispositifs de réseau.

10. Procédé selon la revendication 9, dans lequel les données effectives sont collectées au moyen d'un ou de plusieurs messages de réponse comprenant des informations d'identité de réseau relatives à un dispositif de réseau répondeur et générées en réponse à un ou plusieurs messages à diffusion générale envoyés au réseau de communication déployé du système d'automatisation et de commande industrielles.

11. Procédé selon l'une des revendications 9 et 10, dans lequel un modèle de communication de réseau global du réseau de communication désigné est élaboré, sur la base d'informations implicites ou spécialisées, dans lequel des différences entre le réseau de communication désigné et le réseau de communication déployé sont détectées au moyen du modèle de communication de réseau global.

12. Procédé selon l'une des revendications 9 à 11, dans lequel un modèle de communication de réseau global du réseau de communication déployé est élaboré et transformé en le fichier de description de système, dans lequel des différences entre le réseau de communication désigné et le réseau de communication déployé sont détectées au moyen du fichier de description de système.

13. Produit-programme d'ordinateur comprenant un support lisible par ordinateur sur lequel est enregistré un code de programme d'ordinateur qui ordonne à un processeur d'un ordinateur de :
enregistrer des données de plan d'un réseau de communication désigné d'un système d'automatisation et de commande industrielles,
collecter des données effectives d'un réseau de communication déployé du système d'automatisation et de commande industrielles, et
détecter des différences entre le réseau de communication désigné et le réseau de communication déployé au moyen des données de plan et des données effectives,
dans lequel les données de plan et les données effectives sont des fichiers de description de système comportant des descriptions de configuration de poste en conformité avec IEC 61850, et
dans lequel les données effectives sont collectées en envoyant des messages de demande à un ou plusieurs dispositifs de réseau du réseau de communication déployé du système d'automatisation et de commande industrielles, et en recevant, en réponse, des messages de configuration contenant des connections physiques et/ou logiques des dispositifs de réseau.
